# EUROPÄISCHE PATENTANMELDUNG

(11) **EP 3 199 340 A1**
(43) Veröffentlichungstag der Anmeldung: **02.08.2017**
(21) Anmeldenummer: 17162374.7
(22) Anmeldetag: 08.07.2011
(51) Int. Cl.: B32B 17/10, G02B 27/01, C09D 11/02, C09K 11/06, C08K 5/00, C09D 11/00

(54) **VERBUNDGLASSCHEIBE ALS HEAD-UP-DISPLAY**

(30) Priorität: 23.07.2010 EP 10170560
(62) Teilanmeldung aus: 11740587.8
(71) Anmelder: Saint-Gobain Glass France, 92400 Courbevoie (FR)
(72) Erfinder: LABROT, Michael, 52072 Aachen (DE); LAOUAR, Atlal, 91940 Les Ulis (FR); VAN DER MEULEN, Uwe, 52385 Nideggen (DE); RODRIGUEZ GONZALEZ, Luz, 41464 Neuss (DE)
(74) Vertreter: Ter Meer Steinmeister & Partner

(57) **Zusammenfassung**

Verbundglasscheibe mindestens umfassend
a. eine innere Scheibe (1),
b. eine äußere Scheibe (2) und
c. eine Zwischenschicht (3) zwischen der inneren Scheibe (1) und der äußeren Scheibe (2),
wobei die Zwischenschicht (3) mindestens eine erste Thermoplast-Folie (3b) mit einem ersten lumineszierenden Pigment (3a), eine zweite Thermoplast-Folie (3d) und eine Sperr-Folie (3c) zwischen den Thermoplast-Folien (3b, 3d) enthält und wobei das lumineszierende Pigment (3a) ein Hydroxyalkylterephthalat mit der Formel: R₁-COO-P(OH)x(0-4)-COO-R₂ enthält, wobei R₁, R₂ ein Alkyl- oder Allylrest mit 1 bis 10 C Atomen ist, P ein Phenylring, OH am Phenylring gebundene Hydroxylgruppen und x die Anzahl der am Phenylring gebundenen Hydroxylgruppen sind.

## Beschreibung

Die Erfindung betrifft eine Verbundglasscheibe, ein Verfahren zur Herstellung der Verbundglasscheibe und deren Verwendung als Head-Up-Display.

Head-Up-Displays (HUD) sind in der Luftfahrt weit verbreitet. Die im direkten Sichtfeld der Piloten montierten Systeme zeigen die wichtigsten Informationen des eigenen und der fremden Flugzeuge an. Diese im militärischen Bereich etablierten und vielgenutzten Systeme haben auch im zivilen Bereich, insbesondere im Automobilbereich, viele Anwendungsmöglichkeiten. So können Daten zur Geschwindigkeit, der Abstand zum vorausfahrenden Fahrzeug oder Richtungsangaben des Navigationsgerätes im Gegensatz zu Head-Down-Displays (HDD) direkt auf Augenhöhe des Fahrers angezeigt werden. Diese Möglichkeiten verbessern deutlich die Verkehrssicherheit des Fahrzeuges, da der Fahrer beim Blick auf die Instrumente die Verkehrslage und -situation nicht beobachten kann. Bei erhöhten Geschwindigkeiten des Fahrzeugs, beispielsweise auf der Autobahn, kann der "blind" zurückgelegte Fahrzeugweg beträchtlich sein und eine erhöhte Unfallgefahr bedingen.

Werden Head-Up-Displays (HUD) von einer externen Lichtquelle, wie beispielsweise von einem Laser beleuchtet, so sind die Leuchtfelder in Abhängigkeit von den herrschenden Licht- und Witterungsverhältnissen nur schwer zu erkennen. Starkes Sonnenlicht und Lichtreflexion durch Wassertropfen erschweren deutlich das Erkennen der im Head-Up-Display projizierten Informationen. Dies macht sich besonders deutlich bei virtuellen Bildern bemerkbar, welche auf die Bildfläche, beispielsweise die Frontscheibe, projiziert werden. Ein möglicher Lösungsansatz sind reale, auf der Bildfläche über elektromagnetisch angeregte Farbstoffe oder Pigmente erzeugte Bilder.

Aufgrund der Größe der Scheibe und der Tendenz der Pigmente, sich in der Zwischenschicht gleichmäßig zu verteilen, sind relativ hohe Konzentrationen der farbgebenden Pigmente erforderlich. Die Behandlung der Verbundscheibe im Autoklaven verstärkt diesen Effekt. Hohe Pigmentkonzentrationen sind jedoch in vielen Fällen sehr teuer und erfordern unter Umständen besondere Vorsichtsmaßnahmen im Hinblick auf die gefahrstoffrechtliche Einstufung und Behandlung der Pigmente oder Farbstoffe.

DE 603 14 613 T2 offenbart eine photochrome Zusammensetzung und ein Verfahren zu ihrer Herstellung. Die Zusammensetzung enthält ein lineares, vernetzbares Polyurethan oder Polyurethan-Harnstoff Polymer und eine photochrome organische Verbindung.

WO 2004/099172 A1 offenbart eine photochrome Zusammensetzung auf benzol-, naphthen- und phenathrochromer Struktur substituiert mit einer Arylamingruppe.

US 7,230,767 B2 offenbart ein Bildschirmsystem in einer Fahrzeugscheibe. Die Anordnung enthält lumineszierende Verbindungen auf der nach außen gerichteten Seite der Innenscheibe. Über eine Leuchtquelle werden die lumineszierenden Verbindungen angeleuchtet und erscheinen im Blickfeld eines Autofahrers.

Die Aufgabe der Erfindung liegt darin, eine Verbundglasscheibe bereitzustellen, die als Head-Up-Display genutzt werden kann und auch bei geringen Pigment- oder Farbstoffkonzentrationen bei allen Lichtverhältnissen eine gute Erkennbarkeit sowie hohe Leuchtkraft in einer oder mehreren Farben ermöglicht.

Die Aufgabe der vorliegenden Erfindung wird erfindungsgemäß durch den unabhängigen Anspruch 1 gelöst. Bevorzugte Ausführungen gehen aus den Unteransprüchen hervor.

Ein erfindungsgemäßes Verfahren zur Herstellung einer Verbundglasscheibe mit Head-Up-Display, eine Vorrichtung und deren Verwendung gehen aus weiteren nebengeordneten Ansprüchen hervor.

Die erfindungsgemäße Verbundglasscheibe umfasst mindestens eine innere Scheibe, eine äußere Scheibe und mindestens eine polymere Zwischenschicht. Der Ausdruck "äußere Scheibe" bezeichnet die außen befindliche Scheibe, der Ausdruck "innere Scheibe" bezeichnet die im Fahrzeuginnenraum liegende oder nach innen gerichtete Scheibe. Die Scheiben enthalten bevorzugt Flachglas (Floatglas), Quarzglas, Borosilikatglas, Kalk-Natron-Glas. Die Scheiben weisen bevorzugt eine mittlere Lichttransmission (wenn nicht anders spezifiziert als Lichttransmission für die Lichtart A und einem 2° - Normalbeobachter nach DIN 5033 für Licht der Wellenlängen von 380 nm bis 780 nm) von mehr als 80 %, bevorzugt mehr als 90 % auf. Die Scheiben weisen bevorzugt eine Lichttransmission von > 70 %, besonders bevorzugt 75 % im Wellenlängenbereich von 360 nm bis 420 nm auf.

Die Zwischenschicht enthält mindestens ein erstes lumineszierendes Pigment und bevorzugt eine erste Thermoplast-Folie, eine Sperr-Folie und eine zweite Thermoplast - Folie. Die Thermoplast-Folie enthält bevorzugt PVB (Polyvinylbutyral) oder EVA (Poly-Ethylvinylacetat). Die lumineszierenden ersten Pigmente sind bevorzugt im gesamten ersten Thermoplast-Folienvolumen enthalten. Die Sperr-Folie wirkt als Diffusionssperre für die lumineszierenden Pigmente. Die Sperr-Folie enthält maximal bevorzugt weniger als 20 %, besonders bevorzugt weniger als 10 % und insbesondere bevorzugt weniger als 5 % der Restkonzentration oder "Verunreinigung" an lumineszierendem Pigment im Vergleich zur pigmenthaltigen Thermoplast-Folie.

Das lumineszierende Pigment enthält ein Hydroxyalkylterephthalat mit der Formel: R₁-COO-P(OH)x(0-4)-COO-R₂, wobei R₁, R₂ ein Alkyl- oder Allylrest mit 1 bis 10 C Atomen ist, P ein Phenylring, OH am Phenylring gebundene Hydroxylgruppen und x die Anzahl der am Phenylring gebundenen Hydroxylgruppen. Die allgemeine Strukturformel ist:

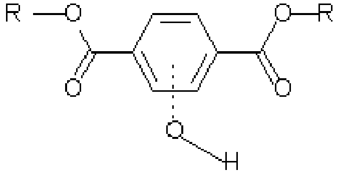

Das lumineszierende Pigment enthält bevorzugt Diethyl-2,5-dihydroxyterephtalat. Die Strukturformel ist:

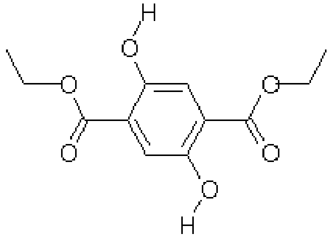

Die lumineszierenden Pigmente können im Sinne der Erfindung weiter organische und/oder anorganische lumineszierende Verbindungen, Ionen, Aggregate und/oder Moleküle enthalten. Lumineszenz beinhaltet Fluoreszenz und/oder Phosphoreszenzprozesse, die Anregung mit elektromagnetischer Strahlung und die Emission elektromagnetischer Strahlung. Die emittierte Strahlung weist bevorzugt eine andere Wellenlänge als die anregende Strahlung auf. Die emittierte Strahlung weist bevorzugt eine höhere Wellenlänge auf. Die zwischen der ersten Thermoplast-Folie und der zweiten Thermoplast-Folie angeordnete Sperr-Folie verhindert oder vermindert die Diffusion von lumineszierenden Pigmenten in die zweite Thermoplast-Folie. Die erste Thermoplast-Folie und weitere Thermoplast-Folien weisen bevorzugt eine Lichttransmission von >70 %, besonders bevorzugt > 82 % gemessen bei einer Wellenlänge von 405 nm auf. Die Lichttransmission der Thermoplast-Folien kann über Foliendicke, Polymerzusammensetzung, Polymerisierungsgrad, Polymerisierungsverteilung, UV-Blocker oder Weichmacher eingestellt werden. Die erfindungsgemäßen Thermoplast-Folien ermöglichen eine nur geringe Schwächung der anregenden und emittierten elektromagnetischen Strahlung und somit eine hohe Leuchtkraft des Head-Up-Displays. Die erste Thermoplast-Folie ist bevorzugt benachbart zur inneren Scheibe, die zweite Thermoplast-Folie bevorzugt benachbart zur äußeren Scheibe angeordnet.

Die Sperr-Folie enthält bevorzugt Polybutylenterephthalat (PBT), Polycarbonat (PC), Polyethylenterephthalat (PET) und Polyethylennaphthalat (PEN), Polyvinylchlorid (PVC), Polyvinylfluorid (PVF), Polyvinylbutyral (PVB) ohne Weichmacher und/oder Copolymere davon, besonders bevorzugt Polyethylenterephthalat (PET).

Die Thermoplast-Folie weist bevorzugt eine Lichttransmission von > 50 %, bevorzugt > 60 %, besonders bevorzugt >70 % gemessen bei einer Wellenlänge von 375 nm auf.

Die Thermoplast-Folie weist bevorzugt eine Lichttransmission von > 75 %, bevorzugt > 82 % im Wellenlängenbereich von 390 nm bis 410 nm auf.

Die Zwischenschicht enthält bevorzugt PVC (Polyvinylchlorid), PU (Polyurethan), EVA (Poly-Ethylvinylacetat) und Mischungen sowie Copolymere davon.

Die zweite Thermoplast-Folie enthält bevorzugt ein zweites lumineszierendes Pigment oder Farbstoff. Das zweite lumineszierende Pigment emittiert bevorzugt Licht einer anderen Wellenlänge als das erste lumineszierende Pigment. Alternativ können weitere Thermoplast-Folien mit lumineszierenden Pigmenten und dazwischen liegende Sperr-Folien angeordnet sein.

Die Sperr-Folie enthält bevorzugt ein drittes lumineszierendes Pigment. In einer besonders bevorzugten Ausführungsform enthalten die erste Thermoplast-Folie, die Sperr-Folie und die zweite Thermoplast-Folie drei unterschiedliche lumineszierende Pigmente.

Die Zwischenschicht enthält bevorzugt keine im Bereich des Anregungsspektrums der fluoreszierenden Partikel zwischen 360 nm und 400 nm wirksamen weiteren UV-Blocker. Die erfindungsgemäßen lumineszierenden Pigmente wirken bevorzugt als UV-Blocker.

Das lumineszierende Pigment weist bevorzugt ein lokales Anregungsmaximum im Bereich von 350 nm bis 450 nm, besonders bevorzugt 390 nm bis 420 nm auf. In diesem Bereich werden gute Ergebnisse erzielt.

Das lumineszierende Pigment weist bevorzugt ein lokales Emissionsmaximum im Bereich von 400 nm bis 800 nm, besonders bevorzugt 430 nm bis 500 nm auf.

Die Zwischenschicht weist bevorzugt eine Dicke von 0,30 mm bis 0,9 mm, bevorzugt 0,50 mm bis 0,80 mm auf.

Die lumineszierenden Pigmente enthalten bevorzugt Benzopyrane, Naphthopyrane, 2H-Naphthopyrane, 3H-Naphthopyrane, 2H-Phenanthropyrane, 3H-Phenanthropyrane, Photochrome Harze, Cumarine, Xanthine, Naphthalinsäurederivate, Oxazole, Stilbene, Styryle, Perylene, Naphthalimide, Naphthale, Phenyle, Xanthene, Lanthanoide, bevorzugt Y₂O₃:Eu, YVO₄:Tm, Y₂O₂S:Pr, Gd₂O₂S:Tb und/oder Gemische davon.

Die lumineszierenden Pigmente enthalten zusätzlich bevorzugt als Lösungsmittel Alkohole, Ketone, Ester, Amine, Amide und/oder Gemische davon. Das lumineszierende Pigment enthält zusätzlich besonders bevorzugt Ethanol, Tetrahydrofuran und/oder Benzylalkohol. Der größte Anteil der Lösungsmittel geht durch Verdampfen nach dem Auftragen der lumineszierenden Pigmente verloren.

Die Zwischenschicht enthält bevorzugt 0,1 g/m² bis 15g/m² lumineszierendes Pigment. Die Mengenangaben beziehen sich auf eine Dicke der Zwischenschicht von etwa 0,76 mm.

Die innere Scheibe und/oder äußere Scheibe weisen bevorzugt eine Dicke von 1 mm bis 4 mm, besonders bevorzugt 1,4 mm bis 2,5 mm auf. Die innere Scheibe und die äußere Scheibe können unterschiedliche Dicken aufweisen.

Die innere Scheibe und/oder äußere Scheibe weisen bevorzugt eine Tönung und/oder Beschichtung auf. Die Tönung und/oder Beschichtung können den Kontrast des projizierten Bildes verstärken und die lumineszierenden Pigmente vor Alterung schützen. Die äußere, nach außen gewandte, Scheibe enthält bevorzugt eine Tönung und/oder Beschichtung und die innere, im Fahrzeuginneren zur Leuchtquelle gewandte Scheibe keine Tönung und/oder Beschichtung.

Die Sperr-Folie weist bevorzugt eine Beschichtung, bevorzugt eine metallische Beschichtung, besonders bevorzugt, ZnO, Ag, In₂O₃, TiO₂, AlN auf. Die Beschichtung verstärkt die Wirkung der Sperr-Folie als Diffusionssperre für die lumineszierenden Pigmente oder Farbstoffe. Die Beschichtung ist bevorzugt benachbart zur Thermoplast-Folie mit dem lumineszierenden Pigment oder Farbstoff auf der Sperr-Folie angeordnet.

Die Erfindung umfasst des Weiteren eine Vorrichtung zum Anzeigen eines Piktogramms, von Zahlen und Schriftzeichen. Die Vorrichtung umfasst eine wie oben beschriebene Verbundglasscheibe und eine auf die Verbundglasscheibe gerichtete Leuchtquelle. Die Leuchtquelle emittiert elektromagnetische Strahlung, bevorzugt elektromagnetische Strahlung der Wellenlänge von 360 nm bis 420 nm. Die von der Leuchtquelle emittierte Strahlung wird von den lumineszierenden Pigmenten in der Zwischenschicht absorbiert und mit veränderter Wellenlänge wieder emittiert. Diese emittierte Strahlung wird vom Betrachter als Bildpunkt auf der Scheibe wahrgenommen. Die Leuchtquelle umfasst bevorzugt einen Diodenlaser.

Die Erfindung umfasst des Weiteren ein Verfahren zur Herstellung einer Verbundglasscheibe. Das Verfahren umfasst in einem ersten Schritt das Auftragen eines ersten lumineszierenden Pigments auf einer ersten Thermoplast-Folie, die im folgenden Schritt zwischen einer inneren Scheibe sowie einer Sperr-Folie, einer zweiten Thermoplast-Folie und einer äußeren Scheibe laminiert wird. Das Laminieren erfolgt bevorzugt bei Temperaturen von 120 °C bis 170 °C, einem Druck von 10 bar bis 15 bar und für einen Zeitraum von 30 min bis 240 min. Beim Laminieren verteilen sich die ersten lumineszierenden Pigmente bevorzugt gleichmäßig in der gesamten Thermoplast-Folie und nur geringfügig in der Sperr-Folie. Die Sperr-Folie enthält nach dem Laminieren bevorzugt weniger als 10 %, besonders bevorzugt weniger als 5 % der Konzentration an erstem luminseszierendem Pigment in der Thermoplast-Folie.

Das lumineszierende Pigment wird bevorzugt über Aufsprühen, Siebdruck, Offsetdruck, Tintenstrahldruck und/oder Flexodruck aufgetragen.

Die Erfindung umfasst des Weiteren die Verwendung der Verbundglasscheibe als transparente oder semi-transparente Anzeigesysteme, Head-Up-Display in Gebäuden, Fahrzeugen, Flugzeugen und/oder Hubschraubern, besonders bevorzugt als Windschutzscheibe in Fahrzeugen.

Im Folgenden wird die Erfindung anhand von Zeichnungen und eines Ausführungs- sowie Vergleichsbeispiels näher erläutert. Die Zeichnungen sind rein schematische Darstellungen und nicht maßstabsgetreu. Sie schränken die Erfindung in keiner Weise ein.

Es zeigen:
Figur 1 einen Querschnitt einer Verbundglasscheibe mit lumineszierenden Partikeln nach dem Stand der Technik,
Figur 2 einen Querschnitt einer erfindungsgemäßen Verbundglasscheibe,
Figur 3 einen Querschnitt der erfindungsgemäßen Zwischenschicht,
Figur 4 einen Querschnitt einer bevorzugten Ausführungsform der erfindungsgemäßen Zwischenschicht,
Figur 5 einen Querschnitt einer weiteren bevorzugten Ausführungsform der erfindungsgemäßen Zwischenschicht und
Figur 6 eine schematische Ansicht der erfindungsgemäßen Vorrichtung.

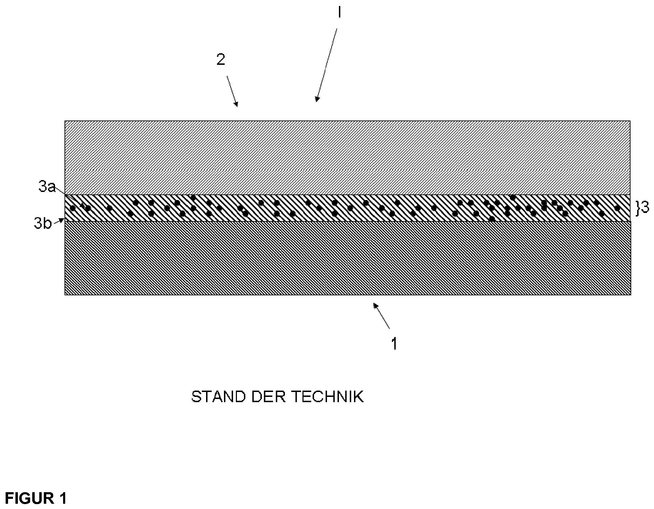

Figur 1 zeigt einen Querschnitt einer Verbundglasscheibe (I) mit lumineszierenden Partikeln (3a) gemäß dem Stand der Technik. Die Verbundglasscheibe (I) umfasst mindestens eine innere Scheibe (1), eine äußere Scheibe (2) und mindestens eine polymere Zwischenschicht (3). Der Ausdruck "äußere Scheibe" bezeichnet die außen befindliche Scheibe, der Ausdruck "innere Scheibe" bezeichnet die im Fahrzeuginnenraum liegende Scheibe der Verbundglasscheibe (I, II). Die Zwischenschicht (3) umfasst eine Thermoplast-Folie (3b) aus PVB und lumineszierende Pigmente oder Farbstoffe (3a), welche nach der Laminierung der Verbundglasscheibe (I) statistisch in der Thermoplast-Folie (3b) verteilt sind. Die breite Verteilung der Pigmente (3a) in der Thermoplast-Folie (3b) macht eine hohe Pigmentkonzentration erforderlich, da nur bei einer hohen Pigmentdichte (3a) die Leuchtkraft ausreichend hoch ist.

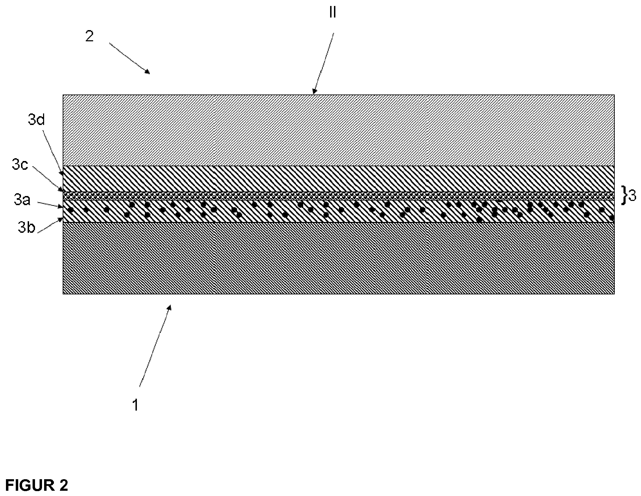

Figur 2 zeigt einen Querschnitt einer erfindungsgemäßen Verbundglasscheibe (II). Die Verbundglasscheibe (II) umfasst mindestens eine innere Scheibe (1), eine äußere Scheibe (2) und mindestens eine polymere Zwischenschicht (3). Die Zwischenschicht (3) umfasst eine erste Thermoplast-Folie (3b) aus PVB und in der Thermoplast-Folie (3b) verteilte lumineszierende Pigmente (3a). An die erste Thermoplast-Folie (3b) schließt sich eine Sperr-Folie (3c) aus PET an, welche auch nach der Laminierung der Verbundglasscheibe praktisch frei von lumineszierenden Pigmenten oder Farbstoffen (3a) ist. Der Ausdruck "praktisch frei" bezieht sich im Sinne der Erfindung auf keine mit dem Auge erkennbare Anregung oder Emission von elektromagnetischer Strahlung in der Sperr-Folie (3c). Eine zweite Thermoplast-Folie (3d) aus PVB ist mit der Sperr-Folie (3c) und der äußeren Scheibe (2) verbunden. Die Verbundglasscheibe (II) zeigte auch nach 4 Wochen Lagerung bei 90° C bei einer Anregung mit einem Laser der Wellenlänge 365 nm von der äußeren Scheibe (2) aus keine sichtbare Emission. Erfolgt die Anregung mit einem Laser der Wellenlänge 365 nm über die innere Scheibe (1), so zeigt die Verbundglasscheibe (II) eine deutliche Emission von Licht im sichtbaren Bereich. Dies zeigt, dass in der Sperr-Folie (3c) keine sichtbaren Anteile an lumineszierenden Pigment (3a) enthalten sind. Wären lumineszierende Pigmente (3a) in die Sperr-Folie (3c) diffundiert, so müsste sich an der Grenzfläche zweite Thermoplast-Folie (3d) und Sperr-Folie (3c) emittierte Strahlung zeigen. In der restlichen Sperr-Folie (3c) und ersten Thermoplast-Folie (3b) zeigt sich aufgrund der UV-Absorption dieser Folien keine Emission.

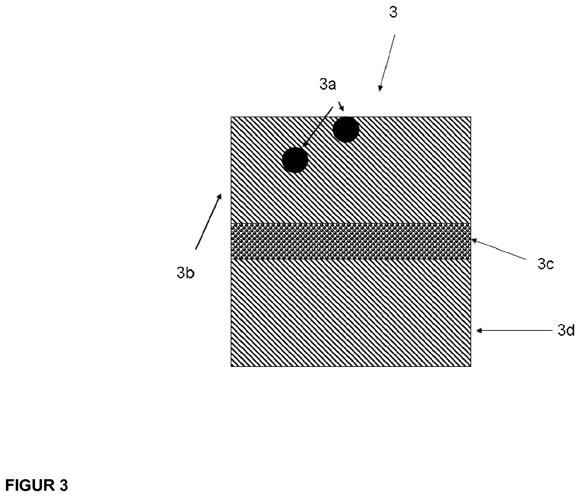

Figur 3 zeigt einen vergrößerten Querschnitt der erfindungsgemäßen Zwischenschicht (3) aus erster Thermoplast-Folie (3b) mit ersten lumineszierenden Partikeln (3a) sowie der sich an die erste Thermoplast-Folie (3b) anschließenden Sperr-Folie (3c) und zweiten Thermoplast-Folie (3d).

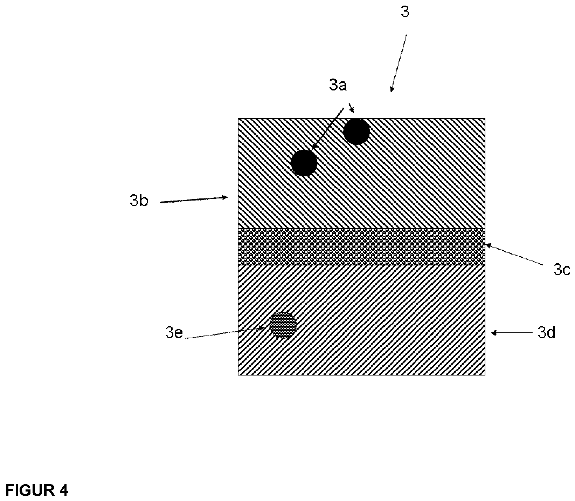

Figur 4 zeigt einen vergrößerten Querschnitt einer bevorzugten Ausführungsform der erfindungsgemäßen Zwischenschicht (3) aus erster Thermoplast-Folie (3b) mit lumineszierenden Partikeln (3a) und der sich an die erste Thermoplast-Folie (3b) anschließenden Sperr-Folie (3c). An die Sperr-Folie (3c) schließt sich eine zweite Thermoplast-Folie (3d) an. Die zweite Thermoplast-Folie (3d) kann ein weiteres lumineszierendes Pigment oder Farbstoff (3e) enthalten. Die Kombination der lumineszierenden Pigmente (3a) und (3e) ermöglicht die Erzeugung weiterer Farbeffekte.

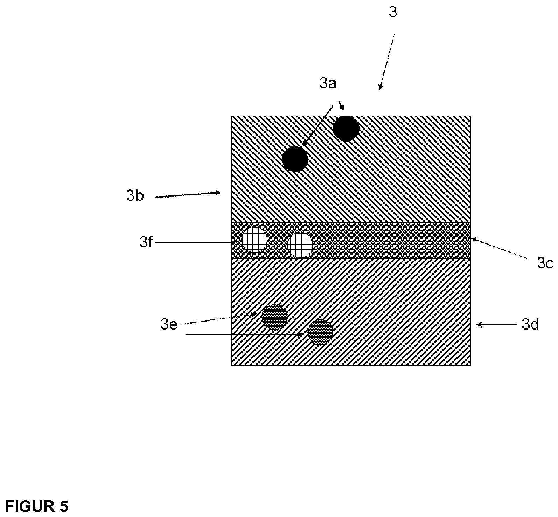

Figur 5 zeigt einen weiteren vergrößerten Querschnitt einer bevorzugten Ausführungsform der erfindungsgemäßen Zwischenschicht (3) aus erster Thermoplast-Folie (3b) mit ersten lumineszierenden Partikeln (3a), Sperr-Folie (3c) und einer weiteren zweiten Thermoplast-Folie (3d) an. Die zweite Thermoplast-Folie (3d) enthält ein zweites lumineszierendes Pigment oder Farbstoff (3e) und die Sperr-Folie (3c) enthält ein drittes lumineszierendes Pigment (3f).

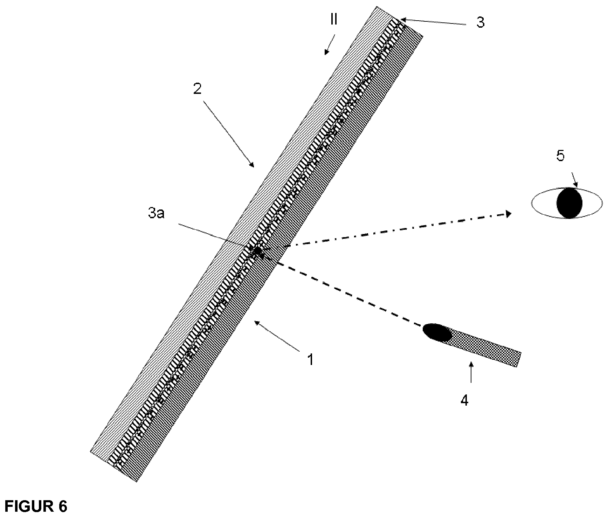

Figur 6 zeigt einen Querschnitt der erfindungsgemäßen Vorrichtung. Die Verbundglasscheibe (II) aus innerer Scheibe (1), Zwischenschicht (3) und äußerer Scheibe (2) wird von einer Leuchtquelle (4), bevorzugt einem Diodenlaser, angestrahlt. Die in der Zwischenschicht (3) befindlichen lumineszierenden Pigmente (3a) emittieren Licht, welches vom Betrachter als Bild, Signal oder Piktogramm wahrgenommen wird.

### Bezugszeichenliste

- (1): innere Scheibe,
- (2): äußere Scheibe,
- (3): Zwischenschicht,
- (3a): erstes lumineszierendes Pigment oder Farbstoff,
- (3b): erste Thermoplast-Folie,
- (3c): Sperr-Folie,
- (3d): zweite Thermoplast-Folie,
- (3e): zweites lumineszierendes Pigment oder Farbstoff,
- (3f): drittes lumineszierendes Pigment oder Farbstoff,
- (4): Leuchtquelle und
- (5): Betrachter.

## Patentansprüche

1. Verbundglasscheibe mindestens umfassend
a. eine innere Scheibe (1),
b. eine äußere Scheibe (2) und
c. eine Zwischenschicht (3) zwischen der inneren Scheibe (1) und der äußeren Scheibe (2),
wobei die Zwischenschicht (3) mindestens eine erste Thermoplast-Folie (3b) mit einem ersten lumineszierenden Pigment (3a), eine zweite Thermoplast-Folie (3d) und eine Sperr-Folie (3c) zwischen den Thermoplast-Folien (3b, 3d) enthält und wobei das lumineszierende Pigment (3a) ein Hydroxyalkylterephthalat mit der Formel:
R₁-COO-P(OH)x(0-4)-COO-R₂ enthält, wobei R₁, R₂ ein Alkyl- oder Allylrest mit 1 bis 10 C Atomen ist, P ein Phenylring, OH am Phenylring gebundene Hydroxylgruppen und x die Anzahl der am Phenylring gebundenen Hydroxylgruppen sind,
wobei die Sperr-Folie (3c) ein drittes lumineszierendes Pigment (3f) enthält.

2. Verbundglasscheibe nach Anspruch 1, wobei die Sperr-Folie (3c) Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB) ohne Weichmacher und/oder Gemische und Copolymere davon, bevorzugt Polyethylenterephthalat (PET) enthält.

3. Verbundglasscheibe nach einem der Ansprüche 1 bis 2, wobei die Zwischenschicht (3) eine Dicke von 0,30 mm bis 0,9 mm, bevorzugt 0,50 mm bis 0,80 mm aufweist.

4. Verbundglasscheibe nach einem der Ansprüche 1 bis 3, wobei das lumineszierende Pigment (3a) Diethyl-2,5-dihydroxyterephtalat enthält.

5. Verbundglasscheibe nach einem der Ansprüche 1 bis 4, wobei die innere Scheibe (1) und/oder äußere Scheibe (2) eine Dicke von 1 mm bis 4 mm, bevorzugt 1,4 mm bis 2,5 mm aufweisen.

6. Verbundglasscheibe nach einem der Ansprüche 1 bis 5, wobei die Sperr-Folie (3c) eine Beschichtung (5), bevorzugt eine metallische Beschichtung, besonders bevorzugt ZnO, Ag, In₂O₃, Ti, TiO₂ und/oder AlN aufweist.

7. Vorrichtung zum Anzeigen eines Piktogramms, Schriftzeichen und/oder Zahlen umfassend eine Verbundglasscheibe nach den Ansprüchen 1 bis 6 und eine auf die Verbundglasscheibe gerichtete Leuchtquelle (4), wobei die Leuchtquelle (4) elektromagnetische Strahlung auf die Verbundglasscheibe emittiert.

8. Vorrichtung nach Anspruch 7, wobei die Leuchtquelle (4) einen Laser, bevorzugt einen Diodenlaser umfasst.

9. Verwendung der Verbundglasscheibe nach einem der Ansprüche 1 bis 6 als Head-Up-Display in Gebäuden, Fahrzeugen, Flugzeugen und/oder Hubschraubern, bevorzugt als Windschutzscheiben in Fahrzeugen.
